# EUROPEAN PATENT SPECIFICATION

(11) **EP 3 731 718 B1**
(45) Date of publication and mention of the grant of the patent: **06.08.2025**
(21) Application number: 18894976.2
(22) Date of filing: 12.10.2018
(51) Int. Cl.: A47L 15/42, A47L 15/48

(54) **A HEAT PUMP DISHWASHER**
WÄRMEPUMPENGESCHIRRSPÜLER
LAVE-VAISSELLE À POMPE À CHALEUR

(30) Priority: 25.12.2017 TR 201721402
(43) Date of publication of application: 04.11.2020
(73) Proprietor: Arçelik Anonim Sirketi, 34445 Istanbul (TR)
(72) Inventor: POYRAZ, Onur, 34445 Beyoglu/Istanbul (TR); GULSEN, Deha, 34445 Beyoglu/Istanbul (TR); ALPTEKIN, Ahmet, 34445 Beyoglu/Istanbul (TR); SAGLICAN, Emre, 34445 Beyoglu/Istanbul (TR); KUTUK, Erkan, 34445 Beyoglu/Istanbul (TR)
(86) International application number: PCT/TR2018/050592
(87) International publication number: WO 2019/132819

(56) References cited:
- EP-A1- 1 721 559
- EP-A2- 2 777 471
- CN-A- 106 580 218
- GB-A- 2 263 969
- JP-A- 2007 117 551
- US-A- 5 524 358
- US-A1- 2017 319 045

## Description

The present invention relates to a dishwasher wherein the efficiency of the heat pump system is increased.

The heat pump system in the heat pump dishwashers is composed of a compressor that pressurizes the refrigerant and provides the circulation thereof, flow tubes wherein the refrigerant circulates, a condenser, an evaporator, and an expansion element. The condenser is a heat exchanger that releases heat to the environment, the surface of which heats up during the circulation of the refrigerant, and enables the water to be heated by being positioned in the washing water of the dishwasher. The evaporator is a heat exchanger that absorbs heat from the environment during the circulation of the refrigerant, and is positioned so as to be in contact with the ambient air. The heat absorbed from the environment by the evaporator is transferred to the condenser by means of the refrigerant. The evaporator increases the amount of heat in the heat pump system by absorbing heat from the environment and enables the surface temperature of the condenser to be increased and thus, the washing water to be heated. The evaporator absorbs heat from the environment by means of at least one fan. The fans sucks the ambient air and blows the same onto the evaporator. The air that is passed over the evaporator is sent back to the kitchen environment by being blown from the rear side of the casing that constitutes the lower section of the dishwasher body and that supports the heat pump system. The ambient (kitchen) air is passed over the evaporator by means of at least one fan. The air passed over the evaporator cools down and is discharged to the outer environment. In both built-in and free standing dishwashers, the air cooled down at the evaporator should be discharged back to the environment for the continuity of the cycle. Due to walls and furniture surfaces at the area where the dishwasher is positioned, discharging air becomes difficult. In particular built-in dishwashers are installed into a wooden cabinet. Said wooden has gaps for the passage of the water inlet hose and the discharge hose; however, said gap is limited for the passage of air. Although in free standing dishwashers, this situation is less of a problem, the wall surface in the kitchen creates resistance against the air flow. This decreases the flow rate of the air passing over the evaporator. Moreover, the air passing over the evaporator and cooling down hits the wall in the path of its flow to be reflected back, thus decreasing the heat transfer capacity of the evaporator. If the flow rate of the ambient air passed over the evaporator decreases, the heat extraction capacity of the evaporator also decreases, and the compressor is required to be operated for a long time to heat the washing water, increasing the energy consumed.

The European Patent No. EP3082554 (B1) relates to a heat pump dishwasher. In the heat pump dishwasher, in the water heating step the ambient air passes over through the evaporator while in the drying step the humid air in the washing environment passes over the evaporator. The evaporator performs dehumidification in the drying process.

The patent application No. EP2682038 (A2) relates to a heat pump dishwasher and the operation method thereof.

The patent application No. CN105476584 (A) relates to a heat pump dishwasher and the control method thereof.

The European Patent No. EP 2 777 471 B1 relates to an automatic dishwasher, in particular configured as a domestic dishwasher, having a wash tub providing a washing compartment, a condensation dryer for supplying a wash tub wall with outside air and a heat pump device for heating washing liquid.The aim of the present invention is the realization of a dishwasher wherein the efficiency of the heat pump is increased and the energy consumption is decreased.

The dishwasher realized in order to attain the aim of the present invention comprises a heat pump system that is composed of a compressor, a condenser, an evaporator, refrigerant flow tubes and an expansion element that together perform the refrigerant cycle. The condenser acts as a heater, and the washing water is heated by the condenser placed into a sump.

The dishwasher of the present invention is of heat pump and free standing or built-in type, and the evaporator air exiting from the rear side of the body is diverted by means of an air duct to be received into the body again, and then directed from the rear side to the front side through the body and sent to the outer environment through an opening at the plinth at the front lower side of the body. Thus, if the dishwasher is positioned close to the kitchen wall or the wooden cabinet wall, the air leaving the evaporator is prevented from getting stuck between the body and the wall and being reflected back, and the flow rate of the air passing over the evaporator, hence the heat transfer capacity of the evaporator is increased while improving the efficiency of the heat pump system.

The heat pump dishwasher realized in order to attain the aim of the present invention is illustrated in the attached figures, where:
Figure 1 - is the schematic view of the heat pump dishwasher of the present invention.
Figure 2 - is the schematic view of the heat pump dishwasher in an embodiment of the present invention.
Figure 3 - is the perspective view of an air duct and an exhaust hood.
Figure 4 - is the perspective view of the casing of the dishwasher.
Figure 5 - is the perspective view of the casing and the drying duct.

The elements illustrated in the figures are numbered as follows:
1. Dishwasher
2. Body
3. Tub
4. Rack
5. Spray arm
6. Circulation pump
7. Drying duct
8. Drying fan
9. Heat pump system
10. Casing
11. Plinth
12. Compressor
13. Condenser
14. Evaporator
15. Evaporator fan
16. Expansion element
17. Air duct
18. Rear opening
19. Front opening
20. Exhaust hood
21. Air duct fan
22. First shutter
23. Second shutter
D: Wall

The dishwasher (1) comprises a body (2); a tub (3) wherein the processes of washing, rinsing and drying are performed; at least one rack (4) wherein the items to be washed are placed; a circulation pump (6) that provide the delivery of the washing water onto the items to be washed by means of at least one spray arm (5); a drying duct (7) that takes the humid air in the tub (3) out of the tub (3) after the washing process so as to provide the circulation thereof and the drying of the items washed; a drying fan (8) that provides the flow of the air in the drying duct (7); a heat pump system (9) that is disposed at the lower part of the tub (3) and that provides the heating of the washing water; a casing (10) that constitutes the lower section of the body (3) and encloses the region wherein the heat pump system (9) is integrated, and a plinth (11) that is disposed at the front surface of the casing (10) facing the user.

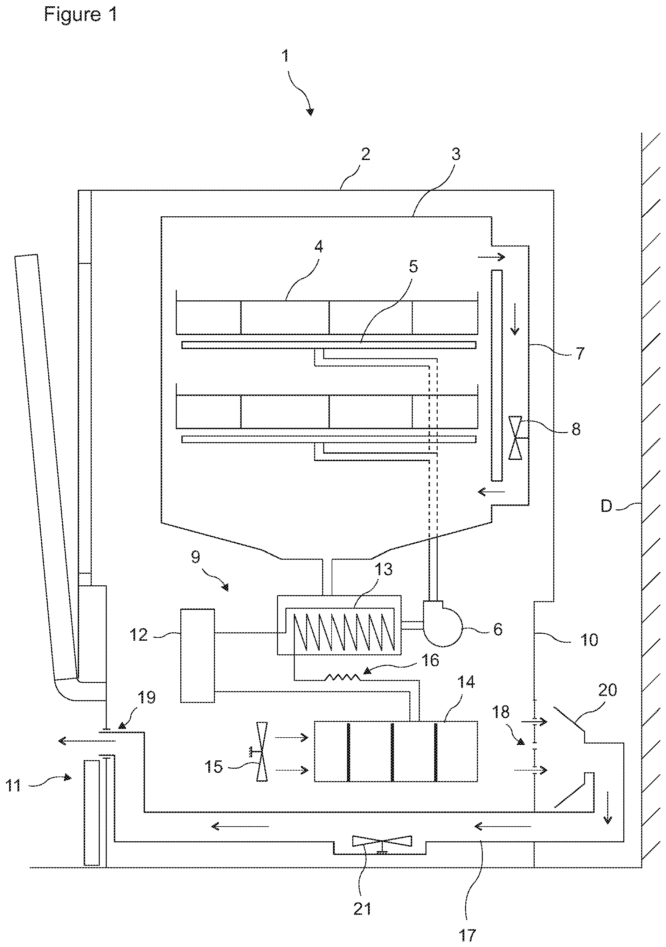

The heat pump system (9) comprises a compressor (12) that performs the refrigerant cycle; a condenser (13) that emanates heat by condensing the refrigerant (refrigerant fluid) pressurized by the compressor (12) and that is used for heating the washing water by being disposed in a sump wherein the washing water is collected; an evaporator (14) that evaporates the refrigerant so as to draw heat from the outer environment and to transfer the same to the condenser (13) by means of the compressor (12); at least one evaporator fan (15) that provides the heat transfer by blowing the ambient air onto the evaporator (14), and an expansion element (16), for example a capillary tube or an expansion valve, that provides the expansion of the refrigerant flowing from the condenser (13) to the evaporator (14) (Figure 1).

The heat pump system (9) is disposed outside the drying duct (7), and the condenser (13) enables the washing water that is taken into the sump to be heated. The heat transfer required for enabling the refrigerant passing through the evaporator (14) to change to the vapor phase is provided by means of the evaporator fans (15).

The dishwasher (1) of the present invention comprises an air duct (17) that collects and takes back into the body (2) the air blown by the evaporator fans (15) to pass over the evaporator (14) and exiting to the outer environment from the lower rear side of the body, that delivers the air from the rear side to the front side through the body (2), and that enables the air to be sent back to the outer environment from the lower front side of the body (2). The air duct (17) passes through the region at the lower section of the body that is surrounded by the casing (10) and wherein the heat pump system (9) is disposed.

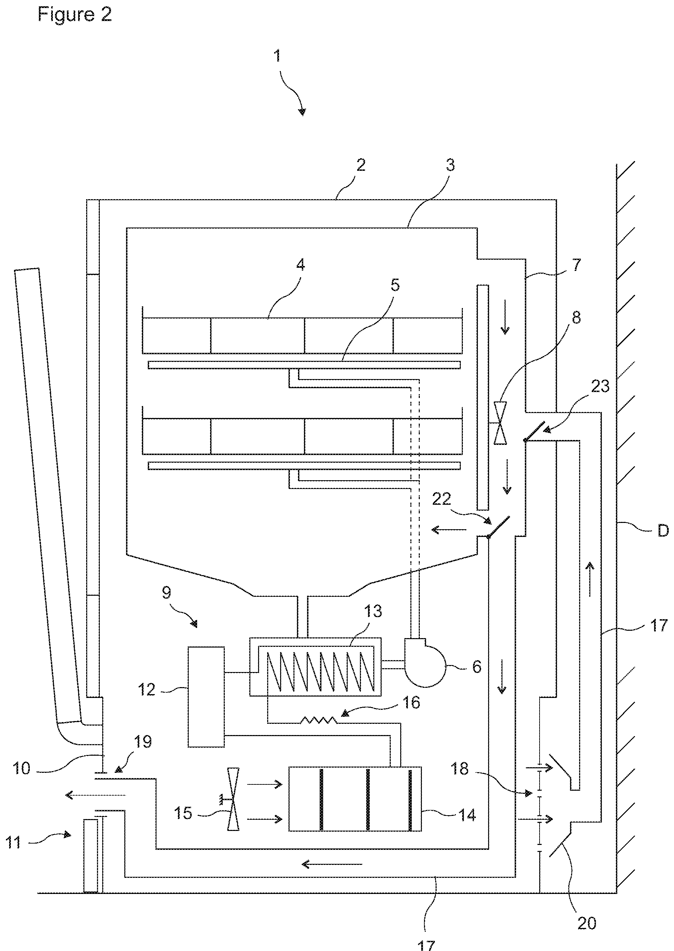

In an embodiment of the present invention, the dishwasher (1) comprises at least one rear opening (18) that is arranged at the lower rear side of the body (2) and through which the air passing over the evaporator (14) is blown, and at least one front opening (19) that is arranged in the plinth (11) at the lower front side of the body (2). The air duct (17) directs the air received from the rear opening (18) so as to be sent to the outer environment through the front opening (19) (Figure 1, Figure 2).

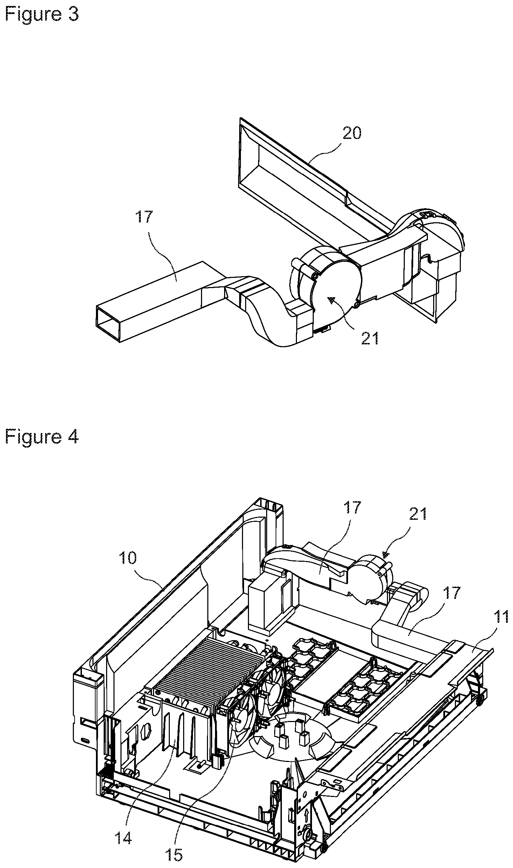

In another embodiment of the present invention, the dishwasher (1) comprises an exhaust hood (20) that is connected to the air duct (17), that is disposed at the lower rear side of the body (2) between the rear opening (18) and the wall (D) of the kitchen or of the wooden cabinet, and that collects the air passed over the evaporator (14) and blown outside through the rear opening (18) (Figure 1, Figure 2, Figure 3).

In the dishwasher (1) of built-in or free standing type, the waste cool air that sweeps the evaporator to leave the body (2) from the rear side thereof is passed through the region surrounded by the casing (10) in the body (2) by means of the air duct (17) and is discharged outside from the front side of the body (2). Even if the dishwasher (1) is positioned close to the wall (D), the flow rate of the air passing over the evaporator (14) does not decrease and is not reflected back from the wall (D).

In an embodiment of the present invention, the air passing over the evaporator (14) is discharged outside through the air duct (17) only with the pressure provided by the evaporator fans (15).

In another embodiment of the present invention, the dishwasher (1) comprises an air duct fan (21) that is arranged in the air duct (17) and that forces the flow of the air, thus, increasing the flow rate of the air sent outside (Figure 1).

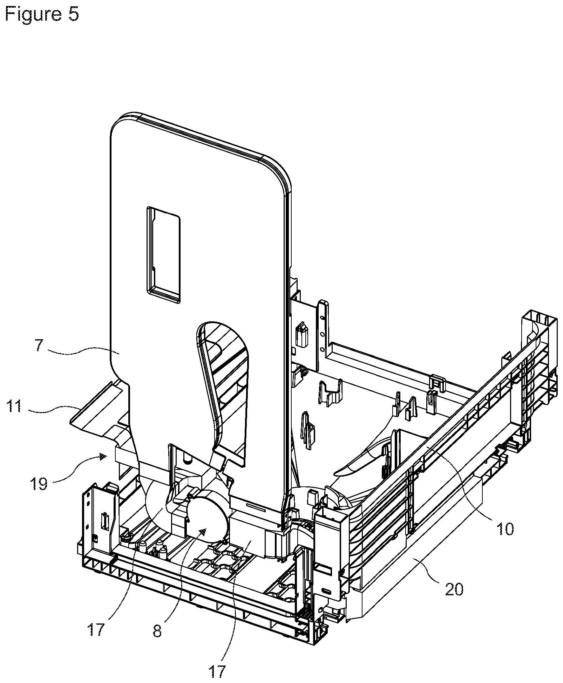

In another embodiment of the present invention, the air duct (17) is connected to the drying duct (7), and the drying fan (8) provides the air flow in the air duct (17) in addition to the air flow in the drying duct (7). The drying fan (8) is used for two separate air cycles and provides that the humid air received from the tub (3) is circulated in the drying duct (7) and the cool air leaving the evaporator (14) is sucked into the air duct (17) (Figure 2, Figure 5).

In this embodiment, the dishwasher (1) comprises a first shutter (22) that is disposed in the drying duct (7) and that enables the drying air to be sent back into the tub (3) or directed to the air duct (17) to be discharged outside, and a second shutter (23) that is disposed in the air duct (17) and that enables the air leaving the evaporator (14) to be sucked by the drying fan (8) so as to be directed to the air duct (17) to be discharged outside and/or enables said air to be directed to the drying duct (7) to decrease the humidity of the drying air (Figure 2).

In the open position of the first shutter (22) and the closed position of the second shutter (23), the drying fan (8) only enables the humid air drawn from the tub (3) to be circulated in through the drying duct (7) so as to be dried.

In the closed position of the first shutter (22) and the open position of the second shutter (23), the drying fan (8) sucks both the air leaving the evaporator (14) and the drying air from the drying duct (7) and sends both to the air duct (17), hence to the outer environment.

In the at least partially open position of the first shutter (22) and the second shutter (23), the drying fan (8) provides the circulation and partial discharge of the drying air. In said positions of the first shutter (22) and the second shutter (23), the air leaving the evaporator (14) is sent to the outer environment through the air duct (17) and partially to the drying duct (7). With the support of the cool and dry air leaving the evaporator (14), the humidity of the air circulated through the drying duct (7) is decreased, and the drying process is expedited (Figure 2).

In this embodiment where the drying fan (8) is jointly used, the humid air in the tub (3) is sucked into the drying duct (7) by means of the drying fan (8). The first shutter (22) is opened to activate the drying duct (7). By closing the second shutter (23), the air flow in the air duct (17) connected to the drying duct (7) is cut off. The drying fan (8) performs only the drying air cycle. Depending on the status of the drying process, the control unit closes the first shutter (22), and the drying air is discharged outside through the air duct (17) and the front opening (19) at the plinth (11). When the air duct (17) is activated by opening the second shutter (23), the drying fan (8) sucks the evaporator (14) air exiting through rear opening (18) and sends the same to the outer environment through the front opening (19). When both the first shutter (22) and the second shutter (23) are changed to the at least partially open position, the cool waste air of the evaporator (14) is enabled to be partially mixed with the drying air.

In the dishwasher (1) of the present invention, the air leaving the evaporator (14) does not get stuck between the body (2) and the wall (D), and can be discharged outside independently of the cabinet or the position of the dishwasher (1). The flow rate of the air passing over the evaporator (14) is increased, thus improving the efficiency of the heat pump system (9). The humid drying air can be mixed with the cool and dry air leaving the evaporator (14), and thus, the drying air with decreased humidity can be discharged outside, shortening the drying process.

## Claims

1. - A dishwasher (1) **comprising** a body (2); a tub (3) wherein the processes of washing, rinsing and drying are performed; a drying duct (7) that provides the drying of the items washed; a drying fan (8) that provides the flow of the air in the drying duct (7); a heat pump system (9) that is disposed at the lower part of the tub (3) and that provides the heating of the washing water; a casing (10) that constitutes the lower section of the body (2) and encloses the region wherein the heat pump system (9) is integrated; a plinth (11) that is disposed at the front surface of the casing (10), and a compressor (12), a condenser (13), an evaporator (14), at least one evaporator fan (15) and an expansion element (16) that constitute the heat pump system (9), wherein the evaporator fan (15) is arranged to blow air onto the evaporator (14); **characterized by** an air duct (17) comprising at least one rear opening (18) that is arranged at the lower rear side of the body (2) and through which the air passing over the evaporator (14) is blown, at least one front opening (19) that is arranged in the plinth (11) at the lower front side of the body (2), and that directs the air received from the rear opening (18) so as to be sent to the outer environment through the front opening (19) and arranged to
- collect and take back into the body (2) the air blown by the evaporator fan (15) to pass over the evaporator (14) and exited to the outer environment from the lower rear side of the body,
- deliver the collected air from the rear side to the front side through the body (2), and
- send the collected air back to the outer environment from the lower front side of the body (2).

2. - A dishwasher (1) as in Claim 1, **characterized by** the air duct (17) that passes through the region at the lower section of the body that is surrounded by the casing (10) and wherein the heat pump system (9) is disposed.

3. - A dishwasher (1) as in Claim 1, **characterized by** an exhaust hood (20) that is connected to the air duct (17), that is disposed at the lower rear side of the body (2) between the rear opening (18) and the wall (D), and that collects the air passed over the evaporator (14) and blown outside through the rear opening (18).

4. - A dishwasher (1) as in Claim 1, **characterized by** the air duct (17) that sends the air passing over the evaporator (14) to the outer environment only with the pressure provided by the evaporator fan (15).

5. - A dishwasher (1) as in Claim 1 , **characterized by** an air duct fan (21) that is arranged in the air duct (17) and that forces the flow of the air, thus, increasing the flow rate of the air sent outside.

6. - A dishwasher (1) as in Claim 1 , **characterized by** the air duct (17) that is connected to the drying duct (7), and the drying fan (8) that provides the air flow in the air duct (17) in addition to the air flow in the drying duct (7).

7. - A dishwasher (1) as in Claim 6, **characterized by** a first shutter (22) that is disposed in the drying duct (7) and that enables the drying air to be sent back into the tub (3) or directed to the air duct (17) to be discharged outside.

8. - A dishwasher (1) as in Claim 6 or 7, **characterized by** a second shutter (23) that is disposed in the air duct (17) and that enables the air leaving the evaporator (14) to be sucked by the drying fan (8) so as to be directed to the air duct (17) to be discharged outside and/or enables said air to be directed to the drying duct (7) to decrease the humidity of the drying air.

## Patentansprüche

1. - Eine Geschirrspülmaschine (1) **umfasst** einen Körper (2); eine Wanne (3), in der die Vorgänge des Waschens, Spülens und Trocknens durchgeführt werden; einen Trocknungskanal (7), der für das Trocknen der gewaschenen Gegenstände sorgt; ein Trocknungsgebläse (8), das für den Luftstrom in dem Trocknungskanal (7) sorgt; ein Wärmepumpensystem (9), das am unteren Teil der Wanne (3) angeordnet ist und für die Erwärmung des Waschwassers sorgt; ein Gehäuse (10), das den unteren Teil des Körpers (2) bildet und den Bereich umschließt, in dem das Wärmepumpensystem (9) integriert ist; einen Sockel (11), der an der Vorderfläche des Gehäuses (10) angeordnet ist, und einen Kompressor (12), einen Kondensator (13), einen Verdampfer (14), mindestens ein Verdampfergebläse (15) und ein Expansionselement (16), die das Wärmepumpensystem (9) bilden, wobei das Verdampfergebläse (15) so angeordnet ist, dass es Luft auf den Verdampfer (14) bläst; **gekennzeichnet ist sie durch** einen Luftkanal (17), der mindestens eine hintere Öffnung (18) umfasst, die an der unteren Rückseite des Körpers (2) angeordnet ist und durch die die über den Verdampfer (14) strömende Luft geblasen wird, und mindestens eine vordere Öffnung (19), die in dem Sockel (11) an der unteren Vorderseite des Körpers (2) angeordnet ist und die die von der hinteren Öffnung (18) empfangene Luft so leitet, dass sie durch die vordere Öffnung (19) in die äußere Umgebung geleitet wird, und die so angeordnet ist, dass
- die vom Verdampfergebläse (15) über den Verdampfer (14) geblasene und von der unteren Rückseite des Gehäuses in die äußere Umgebung ausgetretene Luft zu sammeln und in das Körper (2) zurückzubringen,
- die gesammelte Luft von der Rückseite zur Vorderseite durch den Körper (2) zu leiten und
- die gesammelte Luft von der unteren Vorderseite des Körpers (2) zurück in die äußere Umgebung zu leiten.

2. - Eine Geschirrspülmaschine (1) wie in Anspruch 1 aufgeführt, **ist dadurch gekennzeichnet, dass** der Luftkanal (17) durch den Bereich am unteren Abschnitt des Körpers führt, der von dem Gehäuse (10) umgeben ist und in dem das Wärmepumpensystem (9) angeordnet ist.

3. - Eine Geschirrspülmaschine (1) wie in Anspruch 1 aufgeführt, **ist dadurch gekennzeichnet, dass** eine Ablufthaube (20), mit dem Luftkanal (17) verbunden ist, an der unteren Rückseite des Körpers (2) zwischen der hinteren Öffnung (18) und der Wand (D) angeordnet ist und die über den Verdampfer (14) geleitete und durch die hintere Öffnung (18) nach außen geblasene Luft auffängt.

4. - Eine Geschirrspülmaschine (1) wie in Anspruch 1 aufgeführt, **ist dadurch gekennzeichnet, dass** der Luftkanal (17), der die über den Verdampfer (14) strömende Luft nur mit dem vom Verdampfergebläse (15) erzeugten Druck an die äußere Umgebung abgibt.

5. - Eine Geschirrspülmaschine (1) wie in Anspruch 1 aufgeführt, **ist dadurch gekennzeichnet, dass** ein Luftkanalgebläse (21), das im Luftkanal (17) angeordnet ist und die Luftströmung forciert, wodurch die Strömungsgeschwindigkeit der nach außen geleiteten Luft erhöht wird.

6. - Eine Geschirrspülmaschine (1) wie in Anspruch 1 aufgeführt, **ist dadurch gekennzeichnet, dass** der Luftkanal (17), der mit dem Trocknungskanal (7) verbunden ist, und das Trocknungsgebläse (8), das den Luftstrom im Luftkanal (17) zusätzlich zum Luftstrom im Trocknungskanal (7) liefert.

7. - Eine Geschirrspülmaschine (1) wie in Anspruch 6 aufgeführt, **ist dadurch gekennzeichnet, dass** eine erste Klappe (22), die im Trocknungskanal (7) angeordnet ist und die es ermöglicht, die Trocknungsluft in die Wanne (3) zurück zu leiten oder in den Luftkanal (17) zu leiten, um sie nach außen abzugeben.

8. - Eine Geschirrspülmaschine (1) wie in Anspruch 6 oder 7 aufgeführt, **ist dadurch gekennzeichnet, dass** eine zweite Klappe (23), die in der Luftleitung (17) angeordnet ist und die es ermöglicht, die aus dem Verdampfer (14) austretende Luft durch das Trocknungsgebläse (8) anzusaugen, um sie in die Luftleitung (17) zu leiten, um sie nach außen abzugeben, und/oder es ermöglicht, diese Luft in das Trocknungskanal (7) zu leiten, um die Feuchtigkeit der Trocknungsluft zu verringern.

## Revendications

1. Un lave-vaisselle (1) **comprenant** un corps (2) ; une cuve (3) dans laquelle sont effectués les processus de lavage, de rinçage et de séchage ; un conduit de séchage (7) qui permet le séchage des articles lavés ; un ventilateur de séchage (8) qui assure la circulation de l'air dans le conduit de séchage (7) ; un système à pompe à chaleur (9) qui est disposé dans la partie inférieure de la cuve (3) et qui assure le chauffage de l'eau de lavage ; un carter (10) qui constitue la section inférieure du corps (2) et qui entoure la zone dans laquelle est intégré le système à pompe à chaleur (9) ; un socle (11) qui est situé à la surface frontale du carter (10), et un compresseur (12), un condenseur (13), un évaporateur (14), au moins un ventilateur d'évaporateur (15) et un élément de détente (16) qui constituent le système à pompe à chaleur (9), le ventilateur d'évaporateur (15) étant agencé de manière à souffler de l'air sur l'évaporateur (14) ; **caractérisé par** un conduit d'air (17) comprenant au moins une ouverture arrière (18) qui est disposée à l'arrière inférieur du corps (2) et par laquelle l'air ayant traversé l'évaporateur (14) est expulsé, au moins une ouverture frontale (19) qui est aménagée dans le socle (11) à la partie inférieure frontale du corps (2), et qui dirige l'air reçu par l'ouverture arrière (18) de manière à être envoyé vers l'environnement extérieur par l'ouverture frontale (19), et agencée pour :
- collecter et réintroduire dans le corps (2) l'air soufflé par le ventilateur d'évaporateur (15), après qu'il a traversé l'évaporateur (14) et qu'il a été expulsé vers l'environnement extérieur depuis la partie inférieure arrière du corps,
- acheminer l'air collecté depuis la partie arrière vers la partie avant à travers le corps (2), et
- évacuer l'air collecté vers l'environnement extérieur depuis la partie inférieure frontale du corps (2).

2. - Un lave-vaisselle (1) selon la Revendication 1, **caractérisé par** le conduit d'air (17) qui traverse la zone située dans la partie inférieure du corps entourée par le carter (10), dans laquelle est disposé le système à pompe à chaleur (9).

3. - Un lave-vaisselle (1) selon la Revendication 1, **caractérisé par** une hotte d'évacuation (20) qui est connectée au conduit d'air (17), qui est disposée à la partie arrière inférieur du corps (2), entre l'ouverture arrière (18) et la paroi (D), et qui collecte l'air ayant traversé l'évaporateur (14) et étant expulsé vers l'extérieur par l'ouverture arrière (18).

4. - Un lave-vaisselle (1) selon la Revendication 1, **caractérisé par** le conduit d'air (17) qui expulse l'air ayant traversé l'évaporateur (14) vers l'environnement extérieur uniquement grâce à la pression générée par le ventilateur d'évaporateur (15).

5. - Un lave-vaisselle (1) selon la Revendication 1, **caractérisé par** un ventilateur de conduit d'air (21) qui est disposé dans le conduit d'air (17) et qui force le flux d'air, augmentant ainsi le débit de l'air évacué vers l'extérieur.

6. - Un lave-vaisselle (1) selon la Revendication 1, **caractérisé par** le conduit d'air (17) qui est connecté au conduit de séchage (7), et le ventilateur de séchage (8) qui assure la circulation de l'air non seulement dans le conduit d'air (17), mais aussi dans le conduit de séchage (7).

7. - Un lave-vaisselle (1) selon la Revendication 6, **caractérisé par** un premier obturateur (22) qui est disposé dans le conduit de séchage (7) et qui permet de réinjecter l'air de séchage dans la cuve (3), ou de le diriger vers le conduit d'air (17) pour être évacué vers l'extérieur.

8. - Un lave-vaisselle (1) selon la Revendication 6 ou 7, **caractérisé par** un second obturateur (23) qui est disposé dans le conduit d'air (17) et qui permet à l'air sortant de l'évaporateur (14) d'être aspiré par le ventilateur de séchage (8) de manière à être dirigé vers le conduit d'air (17) et évacué vers l'extérieur, et/ou qui permet audit air d'être redirigé vers le conduit de séchage (7) afin de diminuer l'humidité de l'air de séchage.
